# EUROPÄISCHE PATENTSCHRIFT

(11) **EP 2 936 775 B1**
(45) Veröffentlichungstag und Bekanntmachung des Hinweises auf die Patenterteilung: **02.11.2016**
(21) Anmeldenummer: 13824089.0
(22) Anmeldetag: 16.12.2013
(51) Int. Cl.: H04L 29/06, H04L 29/08, H04L 12/911, H04L 12/54

(54) **VERFAHREN ZUR ERHÖHUNG DER SICHERHEIT IN EINEM VERTEILTEN ECHTZEITSYSTEM SOWIE ECHTZEITSYSTEM**
METHOD FOR INCREASING SECURITY IN A DISTRIBUTED REAL TIME SYSTEM, AND REAL TIME SYSTEM
PROCÉDÉ POUR AUGMENTER LA SÉCURITÉ DANS UN SYSTÈME EN TEMPS RÉEL RÉPARTI ET SYSTÈME FONCTIONNANT EN TEMPS RÉEL

(30) Priorität: 18.12.2012 AT 13082012
(43) Veröffentlichungstag der Anmeldung: 28.10.2015
(73) Patentinhaber: FTS Computertechnik GmbH, 1040 Wien (AT)
(72) Erfinder: KOPETZ, Hermann, A-2500 Baden (AT)
(74) Vertreter: Patentanwaltskanzlei Matschnig & Forsthuber OG
(86) Internationale Anmeldenummer: PCT/AT2013/050253
(87) Internationale Veröffentlichungsnummer: WO 2014/094023

(56) Entgegenhaltungen:
- US-A1- 2008 022 284
- US-A1- 2011 066 854
- MANVI S S ET AL: "An agent based adaptive bandwidth allocation scheme for multimedia applications", JOURNAL OF SYSTEMS & SOFTWARE, ELSEVIER NORTH HOLLAND, NEW YORK (US), Bd. 75, Nr. 3, 1. März 2005 (2005-03-01), Seiten 305-318, XP027636393, ISSN: 0164-1212 [gefunden am 2005-03-01]

## Beschreibung

Die Erfindung betrifft ein Verfahren zur Erhöhung der Sicherheit (security) in einem verteilten Echtzeitsystem, umfassend eine Vielzahl von Rechnerknoten und Verteilereinheiten, wobei zumindest ein inkrementeller Scheduler dynamisch deterministische zeitgesteuerte Kanäle zwischen den Rechnerknoten planen kann.

Weiters betrifft die Erfindung ein verteiltes Echtzeitsystem umfassend eine Vielzahl von Rechnerknoten und Verteilereinheiten sowie zumindest einen inkrementellen Scheduler, welcher Scheduler dazu eingerichtet ist, dynamisch deterministische zeitgesteuerte Kanäle zwischen den Rechnerknoten zu planen.

In vielen technischen Anwendungen werden aktuelle Informationen über den Zustand einer räumlich verteilten Anlage in einer zentralen Warte benötigt. Zum Beispiel ist es bei der Steuerung eines elektrischen Verteilernetzes (*smart grid)* von Vorteil, wenn innerhalb von weniger als einer Spannungsperiode (d.s. 20 Millisekunden) die Informationen über den Zustand der weit (oft hunderte von Kilometern) entfernten Sensoren und Aktuatoren verlässlich in der Zentrale verfügbar sind. Es wäre vorteilhaft, wenn sich in einem Computernetzwerk, insbesondere in einem solchen großen Computernetzwerk (z.B. dem Internet) solche zeitlich vorhersehbare Verbindungen realisieren lassen.

In den bestehenden Internet Protokollen wird der Aufbau einer *Virtuellen Verbindung* zwischen zwei Endsysteme bereits unterstützt. Eine virtuelle Verbindung errichtet einen Pfad von einem sendenden Rechnerknoten zu einem oder mehreren empfangenden Rechnerknoten, wobei der Pfad über eine Vielzahl von Verteilereinheiten, die miteinander über diverse Kommunikationskanäle verbunden sind, führt. Entsprechend dem in [1] veröffentlichten Verfahren wird auf einem solchen vorhandenen Pfad eine zeitgesteuerte deterministische Verbindung derart aufgebaut, dass eine Nachricht von einem Sender zu Empfängern mit einer minimalen Transportzeit transportiert werden kann. Eine Verbindung ist deterministisch, wenn die Transportdauer einer Nachricht über diese Verbindung *a priori* bekannt ist.

Die minimale Dauer der Übertragung einer Nachricht entlang eines Punkt-zu-Punkt Kanals wird bestimmt durch das Propagation Delay und die Bandbreite des Kanals [10]. Eine minimale Transportzeit einer Nachricht entlang eines Pfades, der aus vielen Punkt-zu-Punkt Kanälen zwischen den Verteilereinheiten besteht, wird erreicht, wenn die Phasen des Sendens der Nachricht durch die ausgewählten Verteilereinheiten entlang des bestehenden Pfades derart synchronisiert sind, dass keine unnötige Zwischenspeicherung der Nachricht in einer Verteilereinheit entlang des Pfades vorgenommen werden muss. Um dies zu erreichen, wird in [1] für jede Verteilereinheit entlang des Pfades *a priori* von einem Scheduler in der Verteilereinheit ein Zeitplan erstellt, der die konfliktfreie Vermittlung und Weiterleitung aller von dieser Verteilereinheit zu vermittelnden zeitgesteuerten Nachrichten ermöglicht. Dies setzt voraus, dass alle betroffenen Verteilereinheiten Zugriff auf eine globale Zeit haben [Kop11]. Eine solche globale Zeit kann z.B. durch die Synchronisation über die am ganzen Globus verfügbaren GPS Signale erfolgen.

Da es in einem großen Computernetzwerk, wie etwa dem Internet, keine Zentrale und keine globale Sicht des gesamten Systemzustandes gibt, wird in [2] eine skalierbare dezentrale Lösung vorgeschlagen. Der Ausgangspunkt ist der gleiche wie in [1], wo entlang einer vorgegeben virtuellen Verbindung ein zeitgesteuerter Pfad errichtet wird. Im Unterschied zu [1] wird in [2] die Planung des zeitgesteuerten Pfades (des *TT*-*Pfads*) nicht von den Verteilereinheiten vorgenommen, sondern von einem inkrementellen Scheduler, dem alle Informationen über die bestätigten Reservierungen der entlang des Pfads angeordneten Verteilereinheiten sowie die Parameter des gewünschten neuen zeitgesteuerten Pfades zur Verfügung gestellt werden. Der inkrementelle Scheduler verfügt somit über alle Informationen, die erforderlich sind, um unter der gegebenen Randbedingung (die bereits bestätigten zeitgesteuerten Verbindungen dürfen nicht verändert werden) einen neuen optimalen TT-Pfad zu finden und kann die betroffenen Verteilereinheiten entsprechend parametrisieren.

Sobald ein Computersystem an das Internet angeschlossen wird, ist mit Security-Attacken zu rechnen. Jeder sorgfältige Systementwurf wird deshalb Maßnahmen vorsehen, die den Erfolg von Security-Attacken zu verhindern versuchen [7]. Die Erfahrung zeigt jedoch, dass trotz solcher Maßnahmen eine nicht zu vernachlässigende Wahrscheinlichkeit besteht, dass eine *Intrusion* (*Angriff*) erfolgreich ist und ein System infiziert werden kann. Es ist deshalb vorteilhaft, im Systementwurf eine zweite Schutzebene vorzusehen, die verhindert, dass eine Intrusion großen Schaden anrichten kann.

Wenn nun im Rahmen einer Security-Attacke ein Scheduler von einem *intruder* erfolgreich angegriffen und infiziert wird, so kann dieser infizierte Scheduler die gesamte Bandbreite der unter seiner Kontrolle stehenden Verteilereinheiten mit trügerischen zeitgesteuerten Kanälen belegen und somit Teile eines großen Netzwerkes lahm legen.

Es ist eine Aufgabe der vorliegenden Erfindung, ein Verfahren anzugeben, wie ein solcher Zusammenbruch eines Teils eines Netzwerks verhindert werden kann.

Diese Aufgabe wird mit einem eingangs erwähnten Verfahren dadurch gelöst, dass erfindungsgemäß zumindest eine *trusted Certification and Monitoring Authority* (CMA) den maximalen Anteil der Bandbreite jeder Verteilereinheit, die von einem Scheduler verplant werden darf, festlegt, und wobei diese Festlegungen den Verteilereinheiten und den Schedulern mittels Nachrichten von der CMA mitgeteilt werden, und wobei eine Verteilereinheit, die von einem Scheduler einen Zeitplan empfängt, der mehr Bandbreite beansprucht als dieser maximale Anteil, diesen Zeitplan verwirft.

Um in einem in [2] beschriebenen System zu verhindern, dass ein infizierter Scheduler großen Schaden anrichten kann, wird erfindungsgemäß in dem verteilten Computersystem mindestens ein *vertrauenswürdiger* (trusted) Rechnerknoten, die *trusted certification and monitoring authoriy (CMA)* installiert. Ein *trusted* Rechnerknoten ist ein Rechnerknoten, der mittels kryptographischer Verfahren die Integrität seiner Hardware, Software und Bedienung laufend überprüft [13].

Die CMA weist jedem Scheduler nach dem Startup einen Wert zu der bestimmt, welcher maximale Anteil der Bandbreite einer Verteilereinheit von diesem Scheduler verplant werden darf. Diese Werte werden den Schedulern und den betroffenen Verteilereinheiten von der CMA vorzugsweise mittels Nachrichten mitgeteilt, wobei vorzugsweise die Nachrichten von der CMA zu den Verteilereinheiten, insbesondere durch kryptographische Protokolle, gesichert sind.

Wenn nun ein Scheduler an eine Verteilereinheit einen Zeitplan übergibt, der eine Bandbreite beansprucht, die über diesem maximalen Wert liegt, so wird die Verteilereinheit diesen Zeitplan verwerfen und eine Fehlermeldung an die CMA senden.

Weder in der gefundenen Patentliteratur [1-8] noch in der wissenschaftlichen Literatur wurden Hinweise gefunden, die ein solches Verfahren zur Erhöhung der Sicherheit von zeitgesteuerten Netzwerken nahelegen.

In der zitierten Patentliteratur wurde ein dynamisches Verfahren offen gelegt, wie in einem großen Computernetzwerk, wie z.B. dem Internet, entlang einer bestehenden virtuellen Verbindung, bestehend aus Übertragungssegmenten und Verteilereinheiten, ein optimaler zeitgesteuerter Kanal aufgebaut werden kann, der die konfliktfreie Vermittlung und sofortige Weiterleitung der dynamisch geplanten zeitgesteuerten Nachrichten ermöglicht. Die vorliegende Erfindung legt ein Verfahren offen, wie die Sicherheit (*Security*) eines solchen dynamischen Aufbaus von zeitgesteuerten Verbindungen gewährleistet werden kann. Zu diesem Zweck wird jedem Scheduler für zeitgesteuerte Nachrichten, der die dynamischen zeitgesteuerten Verbindungen plant, Wert zugewiesen, der angibt, welche maximale Bandbreite einer Verteilereinheiten von diesem Scheduler verplant werden darf. Somit wird ausgeschlossen, dass ein durch eine Security Attacke infizierter Scheduler die gesamte Bandbreite einer Verteilereinheit verplant.

Die Erfindung beschreibt somit ein Verfahren, wie in einem Computernetzwerk, insbesondere einem großen Computernetzwerk, das dynamisch deterministische Verbindungen ermöglicht, Sicherheitsattacken erkannt und behandelt werden können, sowie ein solches Computernetzwerk.

Vorteilhafte Ausführungsformen des erfindungsgemäßen Verfahrens und des erfindungsgemäßen Computersystem sind oben sowie in den Unteransprüchen beschrieben, wobei besonders vorteilhafte Ausgestaltungen im Folgenden noch einmal aufgezählt sind. Dabei lassen sich beliebige Kombinationen aus den im Folgenden aufgezählten vorzugsweisen technischen Merkmalen realisieren:
- im Falle, dass eine Verteilereinheit einen Zeitplan verwirft, sendet die Verteilereinheit eine Fehlermeldung an die CMA, wobei in der Fehlermeldung der Scheduler angegeben ist, der diesen fehlerhaften Zeitplan erstellt hat;
- eine CMA beauftragt nach Empfang einer Fehlermeldung von einer Verteilereinheit alle Verteilereinheiten über gesicherte Kanäle, keine weiteren Zeitpläne von dem fehlerhaften Scheduler entgegenzunehmen;
- der Nachrichtenverkehr zwischen der CMA und den Verteilereinheiten ist durch kryptographische Protokolle gesichert.

Im Folgenden ist die Erfindung an Hand der Zeichnung an einer beispielhaften Ausführungsform näher erläutert. In dieser zeigt die einzige

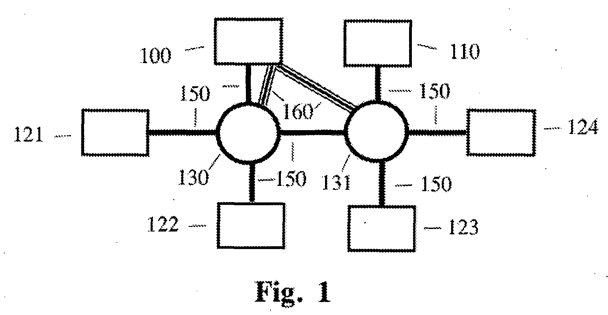

Fig. 1 eine beispielhafte Struktur eines verteilten Kommunikationssystem mit einem Scheduler **110** und einer *Certification and Monitoring Authority* (*CMA*) **100**.

Figur 1 zeigt ein beispielhaftes verteiltes Echtzeit-Computersystem mit vier Rechnerknoten **121, 122, 123, 124,** die eine gegebene Applikation realisieren, einem Rechnerknoten **100,** der die *Certification and Monitoring Authority (CMA)* beinhaltet, und einem Rechnerknoten **110,** der einen Scheduler beinhaltet. Diese sechs Rechnerknoten des verteilten Computersystems sind über Punkt-zu-Punkt Verbindungen **150** direkt oder indirekt mit den beiden Verteilereinheiten **130** und **131** verbunden.

Die CMA **100** ist ein vertrauenswürdiger (*trusted*) Rechnerknoten des Systems, dessen Hardware, Software und Betrieb durch kryptographische und organisatorische Maßnahmen geschützt ist. Zusätzlich sind in Fig. 1 zwei durch kryptographische Protokolle gesicherte Kommunikationskanäle **160** von der CMA zu den beiden Verteilereinheiten **130** und **131** eingetragen.

Im folgenden wird angenommen, dass alle Rechnerknoten und Verteilereinheiten Zugriff auf eine globale Zeit mit bekannter Präzision haben. Eine solche globale Zeit kann über GPS Empfänger aufgebaut werden. Es wird darüber hinaus angenommen, dass *state-of-the art* Maßnahmen wie in [10, Kap. 6] beschrieben gesetzt wurden, um die Sicherheit (security) des verteilten Computersystems zu realisieren.

Wenn der Rechnerknoten **121** eine deterministische Verbindung zum Rechnerknoten **124** errichten will, baut der Rechnerknoten **121** unter Verwendung von Standard Internetprotokollen einen Pfad zum Rechnerknoten **124** auf. In Fig. 1 führt der Pfad über die Verteilereinheiten **130** und **131.** Anschließend sendet der Rechnerknoten **121** eine Nachricht mit den entlang des Pfades angeordneten Verteilereinheiten und den Parametern der gewünschten zeitgesteuerten Verbindung an den Scheduler **110.** Die Parameter einer gewünschten zeitgesteuerten Verbindung sind vorzugsweise:
i. Adresse des Empfängers
ii. Nachrichtenlänge
iii. Maximale Latenz einer Nachricht
iv. Nachrichten Periode
v. Serviceintervall - Das Intervall, während dem die zeitgesteuerte Verbindung benötigt wird.

In der Folge sendet der Scheduler **110** Nachrichten an die im Pfad angeordneten Verteilereinheiten **130** und **131** mit der Aufforderung, alle Parameter der im Serviceintervall bereits bestätigten zeitgesteuerten Verbindungen an den Scheduler **110** zu senden. Eine zeitgesteuerte Verbindung gilt als *bestätigt,* wenn ein Scheduler den Aufbau dieser Verbindung während des beanspruchten Serviceintervalls einem beantragenden Rechnerknoten zugesichert hat.

In der Folge berechnet der Scheduler **110** einen neuen inkrementellen Zeitplan, der die Anforderungen des Rechnerknotens **121** erfüllt, und sendet die entsprechenden Parameter dieses neuen Zeitplans an die Verteilereinheiten **130** und **131.** Sobald die Verteilereinheiten den Empfang dieses neuen Zeitplans quittiert haben, sendet der Scheduler eine Bestätigungsnachricht an den anfordernden Rechnerknoten **121.**

Um zu verhindern, dass ein bösartiger (malicious) Scheduler **110** durch eine trügerischen Zeitplan einen Großteil der Übertragungskapazität einer Verteilereinheit blockieren kann, weist die Configuration und Management Authority (CMA) **100** jedem Scheduler einen maximale Anteil der Bandbreite jeder Verteilereinheit, die von diesem Scheduler verplant werden darf, zu. Wenn eine Verteilereinheit von einem Scheduler einen Zeitplan enthält, der mehr Bandbreite benötigt als dieser maximale Anteil, so verwirft die Verteilereinheit diesen Zeitplan und sendet eine Fehlermeldung an die CMA. In der Fehlermeldung muss der Scheduler angegeben sein, der diesen fehlerhaften Zeitplan erstellt hat.

In der Folge kann die CMA alle Verteilereinheiten, vorzugsweise über gesicherte Kanäle, beauftragen, keine weiteren Zeitpläne von dem fehlerhaften Scheduler entgegenzunehmen.

### Zitierte Literatur:

[1] Österreichische Patentanmeldung der FTS Computertechnik GmbH. v. 19.4.2012 *Selbstorganisierendes Verfahren zum Aufbau von deterministischen Routen in einem großen Computernetwerk.*
[2] PCT/AT 2013/050094 mit Priorität vom 25.6.2012 Verfahren zum Aufbau von optimalen zeitgesteuerten Pfaden in einem großen Computernetzwerk.
[3] US 5,694,542 Kopetz, H. Time-triggered communication control unit and communication method. Granted December 2,1997.
[4] US 7,839,868 Kopetz, H. Communication method and system for the transmission of timedriven and event-driven Ethernet messages. Granted November 23, 2010.
[5] US 8,089,991 Ungermann. Network and method for clock synchronization of clusters in a time triggered network. Granted January 3, 2012.
[6] US 8,018,950 Wu, et al. Systems and methods for distributing GPS clock to communications devices. Granted September 13, 2011.
[7] US Pat Appl. 20110066854 Poledna Method for Secure Dynamic Bandwidth Allocation in a TTEthemet. Mar 17, 2011.
[8] US Pat. Appl. 20120151209. Visnyak, E., et al. Multilevel Security Server Framework. Dated June 14, 2012
[9] Hofmann-Wellenhof, B. et al. GNSS - Global Navigation Satellite Systems: GPS, GLONASS, Galileo, and more. Springer Verlag, 2007
[10] Kopetz, H. Real-Time Systems, Design Principles for Distributed Embedded Applications. Springer Verlag. 2011.
[11] SAE Standard AS6802 von TT Ethernet. URL: http://standards.sae.org/as6802
[12] IEEE 1588 Standard for a Precision Clock Synchronization Protocol for Network Measurement and Control Systems. URL: http://www.ieee1588.com/
[13] Garfinkel et al. Terra-a virtual machine-based platform for trusted computing. Proc. of SIGOPS 2003. Pp. 193-206. 2003.

## Patentansprüche

1. Verfahren zur Erhöhung der Sicherheit in einem verteilten Echtzeitsystem, umfassend Rechnerknoten, insbesondere eine Vielzahl von Rechnerknoten (121 - 124) und Verteilereinheiten (130,131), wobei zumindest ein inkrementeller Scheduler (110) dynamisch deterministische zeitgesteuerte Kanäle zwischen den Rechnerknoten planen kann,
**dadurch gekennzeichnet, dass**
zumindest eine *trusted Certification and Monitoring Authority*, CMA, (100) den maximalen Anteil der Bandbreite jeder Verteilereinheit (130, 131), die von dem zumindest einen Scheduler verplant werden darf, festlegt, und wobei diese Festlegungen den Verteilereinheiten und den Schedulern mittels Nachrichten von der CMA mitgeteilt werden, und wobei eine Verteilereinheit, die von einem Scheduler (110) einen Zeitplan empfängt, der mehr Bandbreite beansprucht als dieser maximale Anteil, diesen Zeitplan verwirft.

2. Verfahren nach Anspruch 1, **dadurch gekennzeichnet, dass** im Falle, dass eine Verteilereinheit (130, 131) einen Zeitplan verwirft, die Verteilereinheit eine Fehlermeldung an die CMA (100) sendet, und wobei in der Fehlermeldung der Scheduler (110) angegeben ist, der diesen fehlerhaften Zeitplan erstellt hat.

3. Verfahren nach Anspruch 1 oder 2, **dadurch gekennzeichnet, dass** eine CMA (100) nach Empfang einer Fehlermeldung von einer Verteilereinheit (130, 131) alle Verteilereinheiten über gesicherte Kanäle beauftragt, keine weiteren Zeitpläne von dem fehlerhaften Scheduler (110) entgegenzunehmen.

4. Verfahren nach einem der Ansprüche 1 bis 3, **dadurch gekennzeichnet, dass** der Nachrichtenverkehr zwischen der CMA (100) und den Verteilereinheiten (130, 131) durch kryptographische Protokolle gesichert ist.

5. Verteiltes Echtzeitsystem umfassend Rechnerknoten, insbesondere eine Vielzahl von Rechnerknoten (121 - 124) und Verteilereinheiten (130, 131) sowie zumindest einen inkrementellen Scheduler (110), welcher dazu eingerichtet ist, dynamisch deterministische zeitgesteuerte Kanäle zwischen den Rechnerknoten zu planen,
**dadurch gekennzeichnet, dass**
das Echtzeitsystem zumindest eine *trusted Certification and Monitoring Authority,* CMA*,* (100) umfasst bzw. eine solche CMA dem Echtzeitsystem zugewiesen ist, welche zumindest eine CMA (100) den maximalen Anteil der Bandbreite jeder Verteilereinheit (130, 131), die von dem zumindest einen Scheduler (110) verplant werden darf, festlegt, und wobei die zumindest eine CMA dazu eingerichtet ist, diese Festlegungen den Verteilereinheiten und den Schedulern mittels Nachrichten mitzuteilen, und wobei eine Verteilereinheit, die von einem Scheduler einen Zeitplan empfängt, der mehr Bandbreite beansprucht als dieser maximale Anteil, diesen Zeitplan verwirft.

6. Echtzeitsystem nach Anspruch 5, **dadurch gekennzeichnet, dass** im Falle, dass eine Verteilereinheit (130, 131) einen Zeitplan verwirft, die Verteilereinheit eine Fehlermeldung an die CMA (100) sendet, und wobei in der Fehlermeldung der Scheduler (110) angegeben ist, der diesen fehlerhaften Zeitplan erstellt hat.

7. Echtzeitsystem nach Anspruch 5 oder 6, **dadurch gekennzeichnet, dass** eine CMA (100) nach Empfang einer Fehlermeldung von einer Verteilereinheit (130, 131) alle Verteilereinheiten über gesicherte Kanäle (160) beauftragt, keine weiteren Zeitpläne von dem fehlerhaften Scheduler (110) entgegenzunehmen.

8. Echtzeitsystem nach einem der Ansprüche 5 bis 7, **dadurch gekennzeichnet, dass** der Nachrichtenverkehr zwischen der CMA (100) und den Verteilereinheiten (130, 131) durch kryptographische Protokolle gesichert ist.

## Claims

1. A method for increasing the security in a distributed real-time system, comprising processor nodes, in particular a plurality of processor nodes (121 to 124) and distributor units (130, 131), at least one incremental scheduler (110) being able to dynamically plan deterministic time-controlled channels between the processor nodes,
**characterized in that**
at least one trusted certification and monitoring authority, CMA, (100) stipulates the maximum share of bandwidth of each distributor unit (130, 131) which the at least one scheduler is allowed to plan, and these stipulations are communicated to the distributor units and the schedulers by the CMA with the aid of messages, and a distributor unit that receives a time schedule from a scheduler (110) which takes up more bandwidth than this maximum share discards this time schedule.

2. The method according to claim 1, **characterized in that**, in the event that a distributor unit (130, 131) discards a time schedule, the distributor unit transmits an error message to the CMA (100), the scheduler (110) that has created this faulty time scheduler being indicated in the error message.

3. The method according to claim 1 or 2, **characterized in that** a CMA (100), after receipt of an error message from a distributor unit (130, 131), orders all distributor units via secured channels not to accept any further time schedules from the faulty scheduler (110).

4. A method according to any one of claims 1 to 3, **characterized in that** the communication between the CMA (100) and the distributor units (130, 131) is secured by cryptographic protocols.

5. A distributed real-time system, comprising processor nodes, in particular a plurality of processor nodes (121 to 124) and distributor units (130, 131), and at least one incremental scheduler (110), which is configured to dynamically plan deterministic time-controlled channels between the processor nodes,
**characterized in that**
the real-time system comprises at least one trusted certification and monitoring authority, CMA, (100), or that such a CMA is assigned to the real-time system, the at least one CMA (100) stipulating the maximum share of bandwidth of each distributor unit (130, 131) which the at least one scheduler (110) is allowed to plan, and the at least one CMA being configured to communicate these stipulations to the distributor units and the schedulers with the aid of messages, and a distributor unit that receives a time schedule from a scheduler which takes up more bandwidth than this maximum share discarding this time schedule.

6. The real-time system according to claim 5, **characterized in that**, in the event that a distributor unit (130, 131) discards a time schedule, the distributor unit transmits an error message to the CMA (100), the scheduler (110) that has created this faulty time scheduler being indicated in the error message.

7. The real-time system according to claim 5 or 6, **characterized in that** a CMA (100), after receipt of an error message from a distributor unit (130, 131), orders all distributor units via secured channels (160) not to accept any further time schedules from the faulty scheduler (110).

8. A real-time system according to any one of claims 5 to 7, **characterized in that** the communication between the CMA (100) and the distributor units (130, 131) is secured by cryptographic protocols.

## Revendications

1. - Procédé pour augmenter la sécurité dans un système en temps réel réparti, comportant des noeuds de calculateur, en particulier une pluralité de noeuds de calculateur (121 - 124) et des unités de distribution (130, 131), au moins un programmateur incrémental (110) pouvant planifier des canaux commandés dans le temps à détermination dynamique entre les noeuds de calculateur,
**caractérisé par le fait que**
au moins une Autorité *de Certification* et de *Surveillance de confiance,* CMA, (100) détermine la, proportion maximale de la bande passante de chaque unité de distribution (130, 131), qui peut être planifiée par le au moins un programmateur, et où ces déterminations sont transmises aux unités de distribution et aux programmateurs au moyen de messages issus de la CMA, et où une unité de distribution, qui reçoit d'un programmateur (110) un programme qui occupe plus de bande passante que cette proportion maximale, rejette ce programme.

2. - Procédé selon la revendication 1, **caractérisé par le fait que** dans le cas où une unité de distribution (130, 131) rejette un programme, l'unité de distribution envoie un message d'erreur à la CMA (100), et où, dans le message d'erreur, il est indiqué le programmateur (110) qui a établi ce programme erroné.

3. - Procédé selon l'une des revendication 1 ou 2, **caractérisé par le fait qu'**une CMA (100), après réception d'un message d'erreur provenant d'une unité de distribution (130, 131), amène toutes les unités de distribution sur des canaux sécurisés, à n'accepter aucun autre programme provenant du programmateur (110) erroné.

4. - Procédé selon l'une des revendications 1 à 3, **caractérisé par le fait que** la communication entre la CMA (100) et les unités de distribution (130, 131) est sécurisée par des protocoles cryptographiques.

5. - Système en temps réel réparti comportant des noeuds de calculateur, en particulier une pluralité de noeuds de calculateur (121 - 124) et d'unités de distribution (130, 131) ainsi qu'au moins un programmateur incrémental (110), lequel est conçu de façon à planifier des canaux commandés dans le temps à détermination dynamique entre les noeuds de calculateur,
**caractérisé par le fait que**
le système en temps réel comporte au moins une *Autorité* de *Certification* et de *Surveillance de confiance,* CMA, (100) où une telle CMA est affectée au système en temps réel, laquelle au moins une CMA détermine la proportion maximale de la bande passante de chaque unité de distribution (130, 131), qui peut être planifiée par le au moins un programmateur (110), et où la au moins une CMA est conçue de façon à transmettre ces déterminations aux unités de distribution et aux programmateurs au moyen de messages, et où une unité de distribution, qui reçoit d'un programmateur un programme qui occupe plus de bande passante que cette proportion maximale, rejette ce programme.

6. - Système en temps réel selon la revendication 5, **caractérisé par le fait que**, dans le cas où une unité de distribution (130, 131) rejette un programme, l'unité de distribution envoie un message d'erreur à la CMA (100), et où dans le message d'erreur, il est indiqué le programmateur (110) qui a établi ce programme erroné.

7. - Système en temps réel selon l'une des revendications 5 ou 6, **caractérisé par le fait qu'**une CMA (100), après réception d'un message d'erreur provenant d'une unité de distribution (130, 131) amène toutes les unités de distribution sur des canaux sécurisés (160), à n'accepter aucun autre programme provenant du programmateur erroné (110).

8. - Système en temps réel selon l'une des revendications 5 à 7, **caractérisé par le fait que** la communication entre la CMA (100) et les unités de distribution (130, 131) est sécurisée par des protocoles cryptographiques.
